Europäisches Patentamt

European Patent Office

Office européen des brevets

(11) Numéro de publication: **0 115 463**
**B1**

(12) **FASCICULE DE BREVET EUROPÉEN**

(45) Date de publication du fascicule du brevet:
20.05.87

(21) Numéro de dépôt: **84400184.2**

(22) Date de dépôt: **27.01.84**

(51) Int. Cl.⁴: **C 04 B 22/08,** C 04 B 22/12,
C 04 B 22/14, E 21 B 33/13

(54) **Compositions de laitiers de ciment pour cimentation de puits pétroliers, permettant de contrôler l'eau libre, et le procédé de cimentation correspondant.**

(30) Priorité: **28.01.83 FR 8301368**

(43) Date de publication de la demande:
**08.08.84 Bulletin 84/32**

(45) Mention de la délivrance du brevet:
**20.05.87 Bulletin 87/21**

(84) Etats contractants désignés:
**DE GB IT NL**

(56) Documents cité:
**DE-A-2 830 528**
**US-A-2 806 531**
**US-A-3 993 134**

(73) Titulaire: **Etudes et Fabrication Dowell Schlumberger, 8, rue Bellini, F-75782 Paris Cedex 16 (FR)**

(72) Inventeur: **Defosse, Camille, 12 Domaine Poyeton, F-42650 St.Jean Bonnefonds (FR)**

(74) Mandataire: **Richebourg, Michel François, Etudes et Fabrication Dowell Schlumberger Z.I. Molina La Chazotte B.P. 90, F-42003 Saint- Etienne Cédex 1 (FR)**

LIBER, STOCKHOLM 1987

**0 115 463**

## Description

La présente invention concerne des compositions de laitiers de ciment pour cimentation de puits pétroliers, comportant un additif permettant de contrôler l'eau libre et/ou la sédimentation même dans les conditions dites de "surdispersion".

Le comportement rhéologique des laitiers de ciment est plus ou moins bien représenté par le "modèle plastique de Bingham". Selon ce modèle la représentation de la contrainte de cisaillement en fonction du taux de cisaillement consiste en une droite de pente égale à la viscosité plastique et d'ordonnée à l'origine YV (seuil de cisaillement). Une propriété critique du laitier réside dans les valeure de la viscosité plastique (PV) et de YV (seuil de cisaillement)

De manière à pouvoir être facilement pompé un laitier de ciment doit présenter une viscosité plastique et un seuil de cisaillement aussi faibles que possible. Ceci est d'autant plus vrai si l'on souhaite un écoulement turbulent.

Dans ce but on sait ajouter de manière classique des agents chimiques dénommés "dispersants ou plastifiants", à l'eau de mélange. Ces agents favorisent la diminution de la viscosité plastique et du seuil de cisaillement d'un laitier de ciment pur (par exemple de classe G) de 40 cP à 20 cP et, respectivement, de 0,220 g/cm$^2$ à 0 g/cm$^2$.

Une autre propriété importante d'un laitier de ciment, qui est pourtant très souvent négligée, réside dans sa capacité à rester homogène lorsqu'il se trouve au repos, durant la période s'étendant entre la fin du pompage et la prise. Très souvent, il se forme au sommet de la colonne de ciment une phase surnageante plus ou moins limpide que l'on dénomme "eau libre". Ceci est dû à l'exsudation ou à la sédimentation des particules de ciment; la partie de l'annulaire qui est en regard de cette phase ne sera pas correctement cimentée.

Ce dernier phénomène peut être expliqué par le fait que au-dessus d'un certain seuil de concentration en dispersant, il n'existe plus que des forces de répulsion entre les particules de ciment. Ceci correspond à la saturation de la surface des particules par les molécules de dispersant adsorbées, les particules de ciment se comportant alors en entités élémentaires susceptibles de sédimenter dans le milieu liquide. Cet état est désigné dans la présente demande par "surdispersion".

Si au contraire la concentration en dispersant ne correspond pas à la saturation il subsiste des forces d'attraction entre les zones d'une particule de ciment ayant été couvertes par le dispersant ces zones étant à charge négative, et les zones non couvertes d'une autre particule de ciment à charge positive. Ceci se traduit par la formation d'une structure tridimensionnelle fragile, dans la phase liquide qui favorise le maintien des particules en suspension. La pression qu'il est nécessaire d'appliquer à cette structure pour la détruire et mettre le fluide en mouvement est le "seuil de cisaillement" (YV). Un seuil de cisaillement YV supérieur à 0 indiquera par conséquent qu'il existe un tel réseau tridimensionnel dans le laitier.

On voit donc que les caractéristiques rhéologiques et les impératifs concernant l'eau libre sont contradictoires.

Actuellement on ne sait que réaliser un compromis par un réglage fin de la concentration en dispersant de manière à obtenir un seuil de cisaillement positif mais aussi faible que possible par exemple inférieur à 2,44 10$^{-2}$ g/cm$^2$.

En pratique cependant il est impossible d'atteindre ce compromis, car la plage de concentration en dispersant permettant de réunir les conditions ci-dessus est extrêmement étroite. En fait la concentration en dispersant ne peut pas être mesurée avec une précision suffisamment grande. De plus, la plage de compatibilité peut être déplacée par des facteurs pratiquement incontrôlables, tenant à la qualité du ciment à la qualité de l'eau de mélange, etc.

En résumé, le passage d'un état de "sous-dispersion" à l'état de "surdispersion" correspond à une variation de concentration en dispersant si faible qu'elle ne peut pas être mesurée avec suffisamment de précision sur le terrain. On est donc amené à toujours utiliser un excès de dispersant; on se trouve donc dans des conditions de "surdispersion" susceptibles de conduire à la formation d'une couche d'eau libre.

Le problème est d'autant plus aigu que l'on utilise des ciments faciles à disperser comme par exemple le ciment Dyckerhoff classe G, et peut être encore aggravé par l'utilisation de certains agents réducteurs du filtrat. Bien entendu un tel inconvénient ne peut pas être accepté dans les sondages déviés.

Il existe donc dans l'industrie pétrolière un besoin crucial en un procédé permettant d'élargir autant que possible le domaine de compatibilité, de façon qu'un dosage imprécis du dispersant n'affecte pas de manière notable le seuil de cisaillement. On a vu ci-dessus qu il était nécessaire que le seuil de cisaillement soit aussi faible que possible, c'est-à-dire aussi proche de zéro que possible, et ne dépasse en tout cas pas une valeur située aux alentours de 2,44 10$^{-2}$ g/cm$^2$, tout en restant constant dans tout l'intervalle de dispersant coursmment utilisé, qui est par exemple de 4,41 à 17,76 litres/tonne de ciment, pour le produit dispersant référencé DS 80, communément utilisé dans les laitiers pétroliers et constitué d'un condensat de formaldéhyde et de naphtalène sulfonate de sodium.

On a découvert selon la présente invention que l'on pouvait créer une microstructure susceptible d'empêcher la sédimentation et donc l'apparition de l'eau libre lorsque l'on se trouve dans les conditions de "surdispersion".

Selon l'invention cette microstructure est créée par un additif, et n'est donc pas construite à partir des particules de ciment elles-mêmes, ce qui fait qu un surdosage en dispersant ne provoque plus la sédimentation, et par conséquent ne provoque plus la formation d'une couche d'eau libre, puisque les

2

particules de ciment, même totalement saturées en molécules de dispersant, restent maintenues en suspension grâce à la microstructure indépendante créée selon l'invention.

Cette microstructure est créée à partir d'un précurseur constitué par un cation introduit sous forme d'un sel soluble de magnésium ou d'un métal défini ci-dessous. Il est à noter que ce sel doit être soluble dans l'eau de mélange du ciment à pH voisin de 7 (pH de l'eau de mélange) et que la précipitation avec formation d'une microstructure ou microgel a lieu dès les premiers instants du mélangeage. Comme métaux susceptibles d'être utilisés, on citera le cobalt, le nickel, le zinc, le cadmium.

On pourra avantageusement mélanger cet additif avec le dispersant habituellement utilisé et l'on obtiendra ainsi une composition dispersante ne donnant plus lieu à la séparation d'eau libre même dans les conditions de "surdispersion".

On pense que de tels sels réagissent avec l'eau intersticielle du laitier dès que l'on ajoute le ciment à l'eau de mélange, et forment ainsi une microstructure très faiblement résistante.

Il est remarquable, et important, de constater que l'ajout de l'additif selon l'invention ne modifie pas le temps d'épaississement du laitier, ni la réponse aux retardateurs, ou aux autres additifs notamment les réducteurs de filtrat.

D'autres caractéristiques et avantages de l'invention seront mieux compris à la lecture de la description qui va suivre et en se référant au dessin annexé sur lequel:

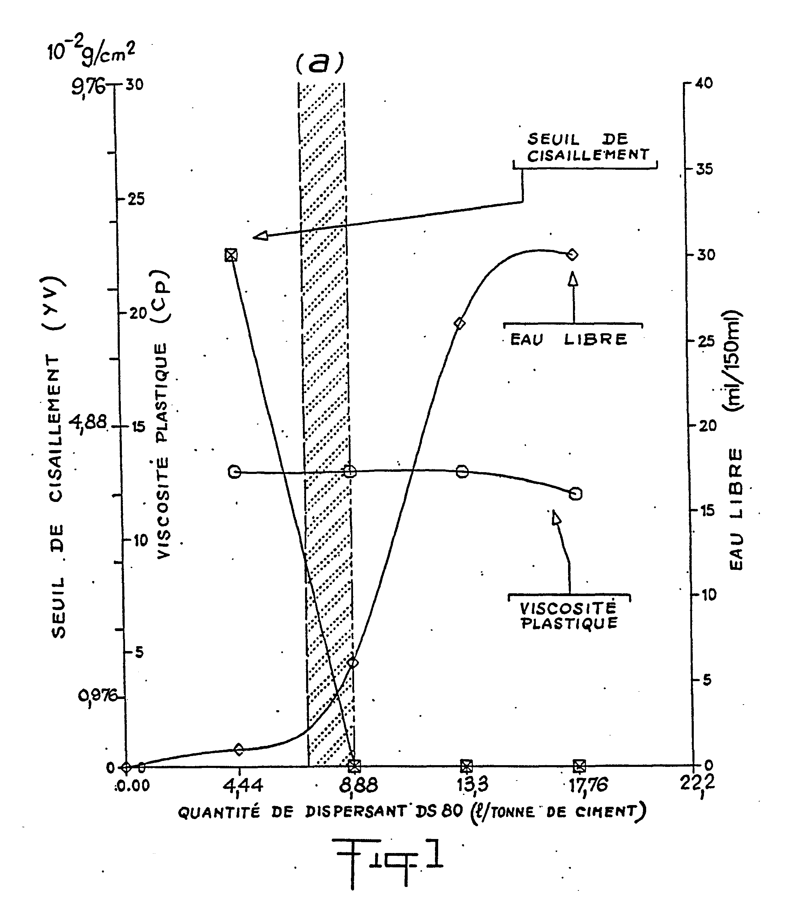

- la figure 1 représente les variations de la viscosité plastique du seuil de cisaillement YV, et de l'eau libre en fonction de la quantité de dispersant, pour un laitier de ciment classe G à 85°C; on voit que, lorsque YV atteint la valeur idéale de 0 g/cm², la formation d'eau libre augmente de manière inacceptable. Cette figure met en évidence le caractère contradictoire des paramètres rhéologiques d'un laitier de ciment et des impératifs concernant la formation de l'eau libre dans le cadre des techniques actuellement mises en oeuvre de manière classique. La zone hachurée (a) représente la plage de compatibilité.

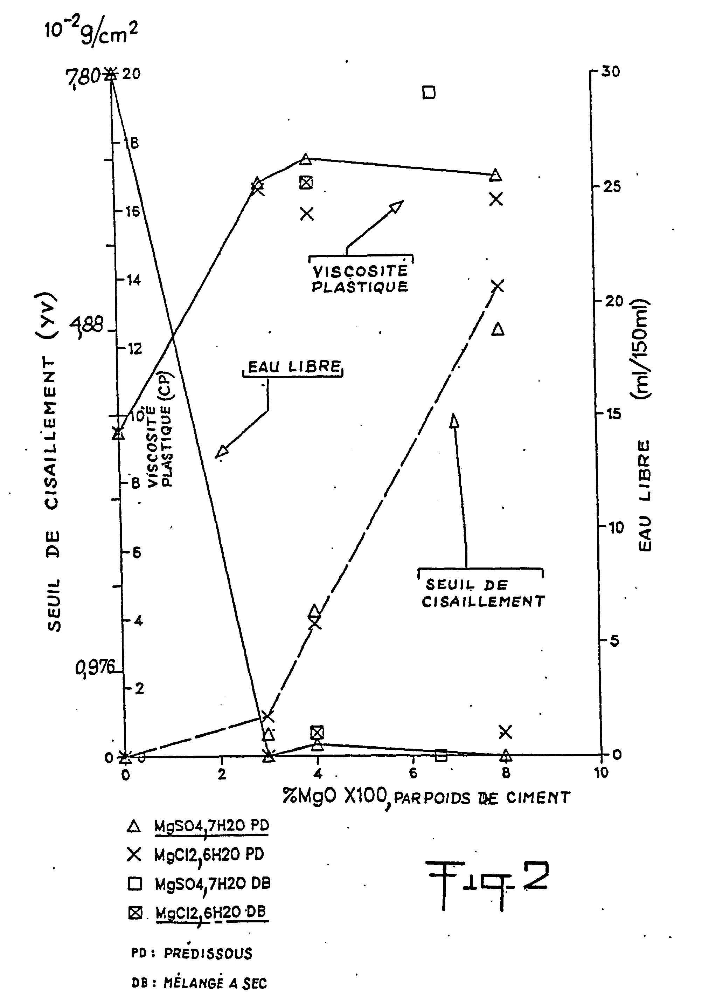

- La figure 2 représente la variation des mêmes paramètres rhéologiques et de la formation d'eau libre dans un laitier de ciment "facile à disperser", l'eau de mélange consistant en eau désionisée et le laitier étant porté à 85°C, après que l'on ait ajouté selon l'invention un sel de magnésium dont on exprimera le pourcentage en "% MgO x 100", par rapport au poids du ciment. Les graphes de la figure 2 ont été tracés pour une concentration de 17,76 litres/tonne de dispersant referencé DS 80, par rapport au ciment.

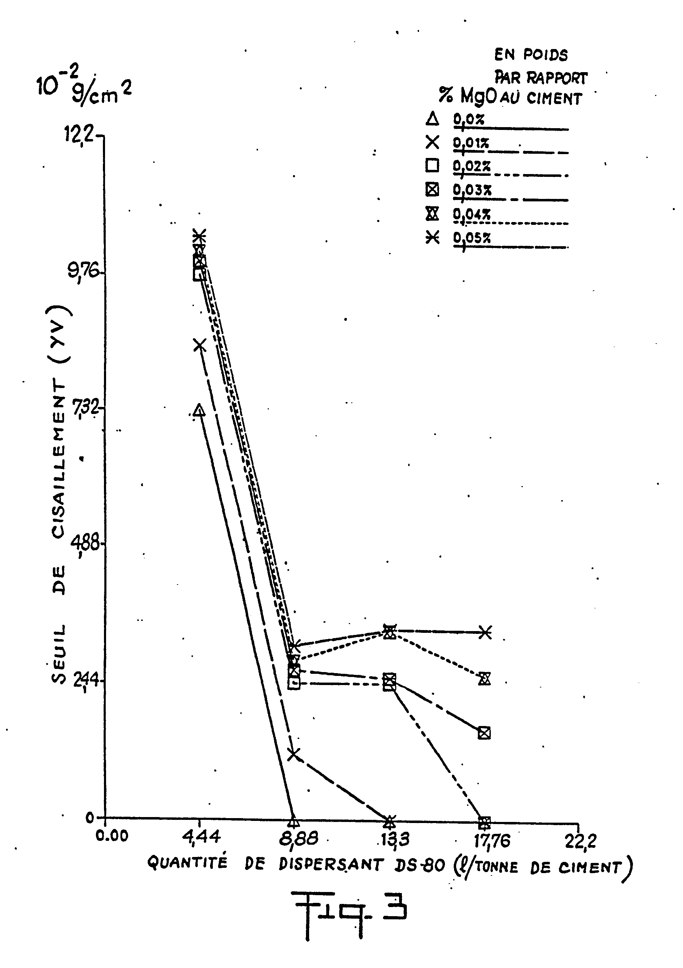

- La figure 3 représente la variation du seuil de cisaillement en fonction de la quantité de dispersant classique introduit, pour différents ajouts d'un sel de magnésium, selon la technique de l'invention; le laitier utilisé est un laitier de ciment "facile à disperser" dans de l'eau désionisée, à 85°C. La proportion de sel de magnésium introduit est exprimée en % MgO par rapport au poids du ciment.

L'agent de contrôle de l'eau libre selon l'invention sera utilisé à raison d'environ 100 micromoles à environ 5 millimoles par 100 g de ciment, de préférence à raison d'environ 100 micromoles à environ 2 millimoles par 100 g de ciment.

Les exemples suivants illustrent l'invention sans toutefois en limiter la portée.

## Exemple 1

### Sels de magnésium et de métaux alcalins:

Tous les laitiers ont été préparés en utilisant des ciments de classe G et 17,76 litres/tonne de ciment du dispersant référence DS 80 selon le mode opératoire de la norme API 10.

On a prédissous le sel de magnésium utilisé dans l'eau de mélange, avant l'addition du ciment dans certains cas cependant, le sel de magnésium était mélangé à sec avec le ciment. Les valeurs de viscosité plastique (PV) et de seuil de cisaillement (YV) ont été calculées par la méthode des moindres carrés, à partir des lectures du viscosimètre FANN à 600, 300, 200 et 100 tr/min.

Les résultats sont rassemblés dans le tableau I ci-après.

D'après ce tableau, on voit qu'une quantité de sel de magnésium aussi faible que 0,03 % par rapport au poids du ciment (quantité exprimée en % MgO) est suffisante pour conduire à une valeur très faible de YV et totalement supprimer la formation d'eau libre. Ceci est confirmé par la hauteur de sédimentation dans la coupelle du viscosimètre FANN au terme des mesures des paramètres rhéologiques. Ce tableau montre également que le type de sel utilisé (sulfate, chlorure, etc.) n'a pas d'influence sur le résultat, non plus que la manière d'introduire le sel (prédissolution dans l'eau de mélange ou bien mélange à sec préalable avec le ciment).

On voit que, alors que les sels de magnésium sont très efficaces, le sulfate de sodium est totalement inefficace. On notera que la valeur négative YV observée lorsque l'on n'a pas ajouté de sel de magnésium est une valeur négative faussée par la lecture à 600 tr/min qui correspond à un laitier en écoulement turbulent en raison de la surdispersion. La valeur réelle à prendre en considération dans ce cas est: zéro.

On a fait varier le type de ciment utilisé pour préparer le laitier et les résultats obtenus sont rassemblés dans le tableau II ci-après. Ce tableau montre que l'on retrouve avec différents types de ciments le même effet du magnésium sur le seuil de cisaillement et, par voie de conséquence, sur le contrôle de l'eau libre pour les laitiers à base de ciment facilement dispersable.

L'action des sels de magnésium est représentée de manière frappante sur la figure 2 annexée, qui représente la relation entre la suppression du phénomène d'apparition de l'eau libre et l'augmentation de la valeur de YV.

La figure 3 pourra être comparée aux figures 1 et 2. Cette figure 3 montre qu'il est possible par l'addition d'un sel de magnésium de maintenir la valeur de YV constante ou sensiblement constante, pour des concentrations en sel de magnésium exprimées en % MgO par rapport au poids du ciment, supérieures à 0,01 % MgO environ, ou de préférence supérieures à 0,02 % MgO environ.

**Exemple 2**

**Sels de métaux autres que le magnésium et comparaison avec les sels de magnésium**

Différents essais ont été réalisés avec les sels de métaux facilement solubles les résultats sont rassemblés dans le tableau III ci-après. On peut en conclure que, en dehors du fer tous les sels essayés sont efficaces pour réduire l'eau libre.

On a ensuite comparé de manière plus approfondie les sels de zinc, étain et nickel. Les résultats sont rassemblés dans le tableau IV ci-après. Les trois métaux en cause conduisent pratiquement à la même amélioration en ce qui concerne le contrôle de l'eau libre mais il est clairement visible que le nickel augmente moins le seuil de cisaillement, Mg, Sn et Zn suivant le nickel dans cet ordre. Des essais conduits à 26,7°C, avec des sels de magnésium et des sels de nickel, ont donné des résultats comparables dans le même domaine de concentrations.

**Exemple 3**

**Influence des additifs selon l'invention sur les autres propriétés du laitier**:

Il est extrêmement important de noter que le temps d'épaississement du laitier n'est pas modifié par la présence des agents de contrôle de l'eau libre selon l'invention. Ceci est également valable en ce qui concerne la réponse du laitier aux retardateurs. Ceci est mis en évidence dans le tableau V ci-après qui reprend des résultats obtenus pour des compositions typiques de laitier comprenant un dispersant un retardateur et un agent anti-mousse. L'ajout d un agent réducteur de filtrat de type polyamine ou polyéthylènimine ne modifie pas les résultats qui ont été obtenus en utilisant le magnésium comme précurseur du microgel. Ce qui précède est valable pour tous les types de retardateurs, et plus particulièrement pour les retardateurs du type lignosulfonate ou glucoheptonate qui sont couramment utilisés dans les laitiers pour la cimentation de puits pétroliers.

Inversement, le tableau VI ci-après montre que l'additif selon l'invention conserve ses propriétés favorables sur le contrôle de l'eau libre et présente la même action en ce qui concerne le seuil de cisaillement, même en présence de retardateurs.

Enfin, le tableau VII ci-après montre que l'influence des additifs selon l'invention sur la résistance à la compression serait plutôt bénéfique, à la concentration utilisée.

**Tableau I**

Essais conduits à 85°C, avec ciment Dyckerhoff classe G type tropical, eau douce et 17,76 litre/tonne de ciment de dispersant DS 80.
Conditions de mélange du sel de Mg:

1. prédissous dans l'eau de mélange

2. mélangé à sec avec le ciment

sel de magnésium

résultats

| forme | concentra-tion (% MgO par rapport au poids du ciment) | conditions de mélange | eau libre ml/150 ml | rhéologie | | sédimenta-tion dans la coupelle (mm) |
|---|---|---|---|---|---|---|
| | | | | PV cP | YV $10^{-2}$g/ cm$^2$ | |

4

| | | | | | |
|---|---|---|---|---|---|
| $MgSO_4 \cdot 7H_2O$ | 0 | - | 30 | 9,5 | 0 | 20 |
| | 0,03 | 1 | 0 | 16,8 | 0,244 | 0,5 |
| | 0,04 | 1 | 0,5 | 17,5 | 1,66 | 1,0 |
| | 0,08 | 1 | 0 | 17,0 | 4,88 | 0,5 |
| $MgCl_2 \cdot 6H_2O$ | 0,03 | 1 | 0 | 16,6 | 0,439 | 0,5 |
| | 0,04 | 1 | 1 | 15,9 | 1,51 | - |
| | 0,08 | 1 | 1 | 16,3 | 5,37 | 0,5 |
| $MgSO_4 \cdot 7H_2O$ | 0,066 | 2 | 0 | 19,4 | 5,95 | 1,0 |
| $MgCl_2 \cdot 6H_2O$ | 0,04 | 2 | 1 | 12,8 | 0,878 | 1,0 |
| $Na_2SO_4$ | 0,10 à 0,50 | 1 et 2 | 30 à 35 | 12 à 13 | < 0** | 25 à 30 |

PV = viscosité plastique
YV = seuil de cisaillement
** Valeur réelle à prendre en considération: zéro

**Tableau II**

Essais conduits à 85°C en utilisant de l'eau désionisée et 17,76 litres/tonne de ciment de dispersant DS 80.

| Marque de ciment | % MgO par rapport au poids du ciment | rhéologie | | eau libre (ml/150 ml) |
|---|---|---|---|---|
| | | P.V. (cP) | Y.V. $10^{-2}$ g/cm² | |
| "Cemoil" | 0 | 14,2 | 1,76 | 0 |
| Classe G | 0,04 | 16,8 | 6,15 | 1 |
| | 0,08 | 13,8 | 15,13 | 0 |
| "Italcementi" | 0 | 13,5 | - 0,683 ** | 30 |
| (usinede Scala | 0,04 | 17,2 | 0,576 | 2 |
| di Giocca) | 0,08 | 18,3 | 3,66 | 1,5 |
| Classe G | | | | |
| "Italcementi" | 0 | 12,3 | 0,151 | 2 |
| (usine de Trieste) | 0,04 | 18,3 | 5,90 | 1,5 |
| Classe G | | | | |

P.V. = viscosité plastique
Y.V. = seuil de cisaillement
** Valeur réelle à prendre en considération: zéro

**Tableau III**

Essais conduits à 85°C avec de l'eau désionisée, du ciment Dyckerhoff Classe G type tropical et 17,76 litres/tonne de ciment de dispersant DS 80.

| métal | sel | % par rapport au poids du ciment | rhéologie | | sédimentation dans la coupelle (mm) | eau libre ml/150 ml |
|---|---|---|---|---|---|---|
| | | | P.V. (cP) | Y.V. $10^{-2}$g/cm² | | |
| Cd | $CdCl_2$ | 0,18 | 18 | 0,488 | 1,5 | 1 |
| Co | $CoCl_2.6H_2O$ | 0,25 | 19,4 | 2,15 | 1,5 | 1 |
| Cr | $CrCl_3.6H_2O$ | 0,28 | 14,5 | - 1,46 ** | 18 | 22 |
| Cu | $CuCl_2.2H_2O$ | 0,08 | 22 | - 2,15 ** | 1 | 20 |
| Fe* | $Fe_2(SO_4)_3$ | 0,19 | 15,2 | - 0,839 ** | 22 | 20 |

| | | | | | | |
|---|---|---|---|---|---|---|
| Hg* | $HgCl_2$ | 0,27 | 13,6 | 0,976 | 1 | 2 |
| Ni | $NiCl_2.6H_2O$ | 0,24 | 15,7 | 1,35 | 1 | 2 |
| Sn(IV)* | $SnCl_4.5H_2O$ | 0,34 | 15,7 | 4,03 | 1 | 2 |
| Sn(II) | $SnCl_2$ | 0,18 | 17,5 | 6,59 | 2 | 3 |
| Zn | $ZnSO_4.7H_2O$ | 0,29 | 15,3 | 1,19 | 2 | 0 |
| Zn | $ZnCl_2$ | 0,13 | 18,4 | 0,747 | 1 | 0 |
| Bi | $Bi(NO_3)_3$ | 0,48 | 12,7 | - 1,17 ** | 20 | 0 |
| Pb | $Pb(NO_3)_2$ | 0,31 | 15,5 | - 1,39 ** | 30 | 5 |

\* +6 ml HCl 1 N dans l'eau de mélange pour dissoudre le sel
P.V. = viscosité plastique
Y.V. = seuil de cisaillement
** Valeur réelle à prendre en considération: zéro

**Tableau IV**

Essais avec des métaux autres que Mg. Essais conduits à 85°C avec ciment Dyckerhoff Classe G type tropical et de l'eau désionisée.

| métal | sel | % de sel par rapport au poids du ciment | % équiva-lent MgO | DS 80 litres/tonne de ciment | P.V. cP | Y.V. $10^{-2}$ g/cm² | sédimen-tation dans la coupelle mm | eau libre ml/150 ml |
|---|---|---|---|---|---|---|---|---|
| Zn | $ZnSO_4.$ $7H_2O$ | 0,29 | 0,04 | 17,8 | 15,3 | 1,19 | 2 | 0 |
| | | | | 8,8 | 30 | 53,7 | 1 | - |
| | | 0,15 | 0,02 | 17,8 | 15,3 | - 0,976 ** | 8 | 2 |
| | | | | 8,8 | 14,7 | 8,25 | 1 | 3 |
| Sn* | $SnCl_4.$ $5H_2O$ | 0,34 | 0,04 | 17,8 | 15,7 | 4,03 | 1 | 2 |
| | | | | 8,8 | 21,9 | 19,4 | 1 | 0 |
| | | 0,15 | 0,018 | 8,8 | 17,4 | 13,6 | 1 | 4 |
| | | | | 17,8 | 15,5 | 1,01 | 1 | 4 |
| Ni | $NiCl_2.$ $6H_2O$ | 0,24 | 0,04 | 17,8 | 15,7 | 1,36 | 1 | 0 |
| | | | | 8,8 | 16,9 | 6,05 | 1 | 0 |
| | | 0,12 | 0,02 | 17,8 | 16,3 | - 0,542 ** | 2 | 3 |
| | | | | 8,8 | 16,3 | 1,28 | 1 | 1 |

\* 5 ml HCl dans l'eau de mélange          P.V. = viscosité plastique
** Valeur réelle à prendre en considération : zéro          Y.V. = seuil de cisaillement

**Tableau V**

Temps d'épaisissement pour un laitier contenant du ciment Dyckerhoff Classe G type tropical 17,76 litres/tonne de ciment de dispersant DS 80, de l'eau douce et le sel $MgSO_4 . 7H_2O$ prédissous dans l'eau de mélange: Mode opératoire norme API 7 g 5.

| MgO (% en poids par rapport au cimemt) | Retardateur (% en poids par rapport au ciment) | Temps d'épaississement (h/min) |
|---|---|---|
| 0 | - | 1:30 |
| 0,06 | - | 1:50 |
| 0,08 | - | 1:30 |
| 0,06 | D 800(*) 0,1 | 3:20 |

6

**0 115 463**

| 0,06 | D 28(**) 0,1 | 6,00 |
| | | (pas de prise) |

(*) du type lignosulfonate modifié; retardateur pour températures moyennes.
(**) à base de dérivés de sucres; retardateur pour hautes températures.

**Tableau VI**

Influence des retardateurs sur l'action de l'additif selon l'invention. Les conditions sont les mêmes que dans le tableau I. $MgSO_4 \cdot 7H_2O$ est prédissous dans l'eau de mélange, en proportion de 0,04 % par rapport au poids du ciment, exprimée en MgO.

| Retardateur (% par rapport au poids du ciment) | | Rhéologie PV (cP) | YV ($10^{-2}$ g/cm$^2$) | Eau libre (ml/150 ml) |
|---|---|---|---|---|
| D 800 | 0,2 % | 17,9 | 1,66 | 1 |
| D 109 | 4,44 cm$^3$/kg | 16,6 | 0,781 | 0 |

PV = viscosité plastique
YV = seuil de cisaillement
D 800: retardateur du type lignosulfonate modifié; pour températures moyennes
D 109: retardateur à base de dérivés de sucres; pour hautes tempéretures

**Tableau VII**

Résistance à la compression après durcissement de 24 h à 85°C - Laitier contenant du ciment Dyckerhoff Classe G type tropical de l'eau douce, 17,76 litres/tonne de ciment de dispersant DS 80 et $MgSO_4 \cdot 7H_2O$ prédissous dans l'eau de mélange.

| MgO (% par rapport au poids du ciment) | Moyenne de 3 mesures (kg/cm$^2$) |
|---|---|
| 0 | 320,7 |
| 0,04 | 395,4 |
| 0,08 | 432,8 |
| 0,15 | 694,5 |

**Revendications**

1. Compositions de laitiers de ciment pour cimentation de puits pétroliers, permettant le contrôle de l'eau libre et contenant un ciment, de l'eau et les additifs classiques dans le domaine de la cimentation des puits, caractérisées en ce qu'elles contiennent de plus un agent de contrôle de l'eau libre consistant en environ 100 micromoles à 5 millimoles par 100 g de ciment d'un sel soluble dans l'eau et à pH voisin de 7 de magnésium ou d'un métal choisi parmi Ni, Co, Cd et Zn, ou d'un de leurs mélanges.

2. Compositions selon la revendication 1, caractérisées en ce que la concentration en ledit agent de contrôle de l'eau libre est de 100 micromoles à 2 millimoles par 100 g de ciment.

3. Compositions selon l'une quelconque des revendications 1 ou 2, caractérisées en ce que ledit agent consiste en un sel soluble dans l'eau et à pH voisin de 7 de magnésium et/ou de nickel.

4. Compositions selon la revendication 3, caractérisées en ce que ledit agent consiste en $MgSO_4 \cdot 7H_2O$ et/ou

7

MgCl$_2$ . 6H$_2$O et/ou NiCl$_2$ . 6H$_2$O.

5. Procédé de cimentation de l'annulaire d'un puits pétrolier, caractérisé en ce qu on injecte par pompage une composition selon l'une quelconque des revendications 1 à 4, ledit agent de contrôle de l'eau libre ayant été introduit:

- soit par prédissolution dans l'eau de mélange,
- soit par mélange à sec préalable avec le ciment,
- soit encore par mélange préalable avec l'un des additifs classiques de cimentation.

6. Utilisation, comme agent de contrôle de l'eau libre dans les compositions de laitier de ciment pour cimentation des puits pétroliers, d'au moins un sel tel que défini dans les revendications 1 à 4.

7. Dispersant permettant le contrôle de l'eau libre dans les compositions de laitier de ciment pour cimentation de puits pétroliers, caractérisé en ce qu'il consiste en un mélange d'un dispersant classique et d'un agent de contrôle de l'eau libre tel que defini dans la revendication 6.

## Patentansprüche

1. Zementschlackezusammensetzungen für die Zementierung von Erdölbohrlöchern zur Kontrolle freien Wassers, enthaltend einen Zement, Wasser und auf dem Gebiet der Bohrlochzementierung herkömmliche Zusätze, dadurch gekennzeichnet, daß sie zusätzlich ein Mittel zur Kontrolle freien Wassers enthalten, bestehend aus etwa 100 Mikromol bis 5 Millimol pro 100 g Zement eines bei einem pH nahe 7 wasserlöslichen Magnesiumsalzes oder Metallsalzes, ausgewählt unter Ni, Co, Cd und Zn-Salzen, oder einer ihrer Mischungen.

2. Zusammensetzungen nach Anspruch 1, dadurch gekennzeichnet, daß die Konzentration des genannten Kontrollmittels für freies Wasser von 100 Mikromol bis 2 Millimol pro 100 g Zement beträgt.

3. Zusammensetzungen nach einem der Ansprüche 1 oder 2, dadurch gekennzeichnet, daß das genannte Mittel aus einem bei einem pH nahe 7 wasserlöslichen Magnesium- und/oder Nickelsalz besteht.

4. Zusammensetzungen nach Anspruch 3, dadurch gekennzeichnet, daß das genannte Mittel aus MgSO$_4$.7H$_2$O und/oder MgCl$_2$.6H$_2$O und/oder NiCl$_2$.6H$_2$O besteht.

5. Verfahren zum Zementieren des Ringraums eines Erdölbohrlochs, dadurch gekennzeichnet, daß man mittels Pumpen eine Zusammensetzung nach einem der Ansprüche 1 bis 4 injiziert, wobei das Kontrollmittel für freies Wasser eingesetzt wird

- entweder durch Vorauflösung im Anmachwasser,
- oder durch vorherige Trockenmischung mit dem Zement,
- oder auch durch vorheriges Mischen mit einem der bei der Zementierung herkömmlichen Zusätze.

6. Verwendung mindestens eines Salzes, wie in Ansprüchen 1 bis 4 definiert, als Mittel zur Kontrolle des freien Wassers in Zusammensetzungen von Zementschlacke für die Zementierung von Erdölbohrlöchern.

7. Dispergiermittel, das die Kontrolle freien Wassers in Zusammensetzungen von Zementschlacke für die Zementierung von Erdölbohrlöchern ermöglicht, dadurch gekennzeichnet, daß es aus einer Mischung eines herkömmlichen Dispergiermittels und eines Mittels zur Kontrolle freien Wassers, wie in Anspruch 6 definiert, besteht.

## Claims

1. Cement slag compositions for the cementation of oil wells, permitting control of free water and containing a cement, water and additives which are conventional in the well cementation art, characterised in that they also contain an agent for controlling free water which consists of approximately 100 micromoles to 5 millimoles per 100g of cement of a salt which is soluble in water and at a pH-value of close to 7, of magnesium or a metal selected from Ni, Co, Cd and Zn, or one of the mixtures thereof.

2. Compositions according to claim 1 characterised in that the concentration of said agent for controlling free water is 100 micromoles to 2 millimoles per 100 g of cement.

3. Compositions according to either one of claims 1 and 2 characterised in that said agent consists of a salt which is soluble in water and at a pH-value of close to 7, of magnesium and/or nickel.

4. Compositions according to claim 3 characterised in that said agent consists of MgSO$_4$ . 7H$_2$O and/or MgCl$_2$. 6H$_2$O and/or NiCl$_2$ . 6H$_2$O.

5. A process for cementation of the annulus of an oil well characterised by injecting by pumping a composition according to any one of claims 1 to 4, said agent for controlling the free water having been introduced:

- either by pre-dissolution in the mixing water,
- or by dry mixing beforehand with the cement,
- or by mixing beforehand with one of the conventional cementation additives.

6. Use as an agent for controlling the free water in cement slag compositions for the cementation of oil wells, of at least one salt as defined in claims 1 to 4.

7. A dispersant for controlling free water in cement slag compositions for the cementation of oil wells characterised in that it consists of a mixture of a conventional dispersant and an agent for controlling free water as defined in claim 6.

Fig.1

Fig 2

△ MgSO4,7H2O PD

✕ MgCl2,6H2O PD

□ MgSO4,7H2O DB

⊠ MgCl2,6H2O DB

PD : PRÉDISSOUS

DB : MÉLANGÉ A SEC

Fig. 3